# EUROPEAN PATENT APPLICATION

(11) **EP 4 776 262 A1**
(43) Date of publication of application: **15.07.2026**
(21) Application number: 25869642.6
(22) Date of filing: 11.06.2025
(51) Int. Cl.: G09B 9/00, G09B 5/02, G09B 7/02, G09B 19/00, G06Q 50/20, H01M 4/04, H01M 10/44

(54) **BATTERY CELL FORMATION PROCESS SIMULATION SYSTEM**

(30) Priority: 21.10.2024 KR 20240143776
(71) Applicant: LG ENERGY SOLUTION, LTD., Seoul 07335 (KR)
(72) Inventor: KIM, Daecheon, Daejeon 34122 (KR); PARK, Dae Hyun, Daejeon 34122 (KR); LEE, Tae Hee, Daejeon 34122 (KR); KIM, Eung Seo, Daejeon 34122 (KR)
(74) Representative: Goddar, Heinz J.
(86) International application number: PCT/KR2025/007956
(87) International publication number: WO 2026/089179

(57) **Abstract**

Provided is a battery cell activation process simulation system capable of efficiently train new trainees on actual activation process equipment without affecting the operation of actual activation process equipment. The system includes: a server storing basic information and training information about a training equipment as a training target battery cell activation equipment, and work history of a trainee participating in the training; a terminal providing the training information to the trainee participating in the training; an input interface provided at the terminal for inputting information of the trainee participating in the training; and a training contents selection logic constructing a training curriculum to be provided to the terminal based on an inputted information of the trainee.

## Description

### [TECHNICAL FIELD]

This application claims the benefit of priority based on Korean Patent Application No. 10-2024-0143776 filed on October 21, 2024, entire content disclosed in the document of the patent applications is included as a part of this specification.

The present invention relates to a battery cell activation process simulation system, and more specifically, to a battery cell activation process simulation system capable of efficiently train new trainees on actual activation process equipment without affecting the operation of actual activation process equipment.

### [BACKGROUND ART]

As the demand for secondary batteries is rapidly increasing, the installation and operation time of secondary battery production equipment are increasing. Although a considerable level of automation has been achieved for production equipment, management based on manpower is still required. Therefore, new manpower is continuously being invested in the expanded equipment. In this trend of increasing equipment installation and operation time to respond to product demand, training trainees based on actual equipment inevitably limits the operation time of equipment, which is against the purpose of increasing equipment to respond to product demand.

Since the activation process of secondary batteries includes multiple activation process steps, inspection steps, evaluation steps, and shipment packaging steps for assembled batteries, new workers may learn the activation process with the help of experienced workers. However, when there is a shortage of experienced workers for a newly introduced process line or there is a language barrier in worker training at an overseas factory, a simulation that reproduces the battery activation process exactly as it is may be used for worker training.

To complete the manufacturing of cylindrical batteries, an EOL (end of line) process may be performed at the end of the activation process. While electrical characteristic measurements, exterior inspections, and battery cell packaging may be performed in the EOL process, workers may need a lot of field experience to become proficient in these.

Accordingly, a simulation system is being developed to implement equipment to the extent that it is comparable to actual equipment in virtual reality and to train trainees. Such simulation system is implemented by virtually implementing all equipment for manufacturing a certain product. Such simulation system has a positive effect in that the operation of the actual equipment is not affected.

Recently, as the capacity of battery cells has increased from the 21700 form factor to the 46800 form factor, the introduction of new equipment corresponding thereto is necessary. In addition, the same equipment as the previous equipment or equipment with some changes is used.

However, the conventional simulation system consisting of a uniform training scenario does not reflect the individual characteristics of the trainees participating in the training. For example, it is inefficient in terms of manpower utilization to conduct training with the same training scenario for a trainee who is encountering the training target equipment for the first time and a trainee who already has experience with equipment of a similar product group.

In addition, since there is a lot of content to be trained according to the uniform training scenario, the speed of improvement in work proficiency is slow compared to that of the trainee who received training in the actual process equipment even when the trainee who received this training is assigned to the management work of the actual production equipment.

### [DISCLOSURE]

### [TECHNICAL PROBLEM]

In order to solve above-described problems, it is an object of the present invention to provide a battery cell activation process simulation system with improved training efficiency by providing a training scenario that reflects the individual characteristics of the trainee.

It is an object of the present invention to provide a battery cell activation process simulation system capable of producing results similar to those of apprenticeship training in actual process equipment.

It is an object of the present invention to provide a battery cell activation process simulation system capable of providing a training curriculum for new equipment, existing equipment and changed equipment of an activation process corresponding to battery cells with large capacity so as to be suitable for the individual work capacity of trainees.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

The battery cell assembly process simulation system of the present invention for solving the above-described problem may be used to train trainees working on a cylindrical can type battery cell activation process. However, the type of product is not limited thereto.

The battery cell assembly process simulation system includes: a server storing basic information and training information about a training equipment as a training target battery cell activation process equipment, and information of a trainee participating in the training.

The training equipment may include, for example, a measuring equipment measuring internal resistance (IR) and open circuit voltage (OCV) of a battery cell, and a characteristic inspection equipment classifying battery cells into a defective product for re-work, a defective product in characteristics, and a defective product to be discarded according to an activation characteristic grade.

The non-defective battery cell may be directly transferred to the exterior inspection equipment, which is the next process.

The defective battery cell for re-work may be automatically received by the activation equipment through the designated re-work route and re-work may be performed.

The defective battery cell in characteristics is a battery cell with resistance and voltage measured by the measuring equipment outside the allowable standards, and may be remeasured and re-sorted.

The defective battery cell to be discarded may be classified as a low voltage defect and a charging defect and discarded.

The training equipment may include, for example, exterior inspection equipment that inspects the exterior of a battery cell to determine whether the battery cell is defective, and re-inspection equipment that returns battery cells determined to be defective by the exterior inspection equipment to the exterior inspection equipment.

The exterior inspection equipment may inspect the exterior of the battery cell determined as a non-defective product by the inspection equipment.

The exterior inspection equipment may include a vision.

The exterior inspection equipment may inspect the exterior of the upper portion, lower portion and side surface of the battery cell, and inspect the flatness and exterior dimensions.

The battery cell determined as a non-defective product by the exterior inspection equipment may be transferred directly to the packaging equipment.

The re-inspection equipment may include a re-evaluation area (ROS) where the worker checks the inspection image for re-evaluation.

The training equipment may include a grader that classifies the defective battery cell by type of defect. The grader may classify the defective battery cell in response to the defect type of the battery cell confirmed by the re-inspection equipment.

The packaging equipment may sequentially read the ID of the battery cell, the ID of the inner box into which the battery cell is inserted, the ID of the outer box into which the inner box is inserted, and the ID of the pallet on which the outer box is loaded, to collect tracking information.

The packaging equipment may include an inner box feeder, a lower tray feeder, an upper tray feeder, an inner packaging desiccant feeder, an outer box feeder, a tape attachment device, a labeling device, a pallet feeder, a lower vinyl feeder, an outer packaging desiccant feeder, an upper vinyl feeder, an upper angle feeder, a side surface angle feeder, a banding device, and a wrapping device.

The basic information about the training equipment may include whether a corresponding training equipment is: an equipment identical to the existing equipment; an equipment partially changed from the existing equipment; and new equipment.

The training information about the training equipment may include: a new training information based on the premise that the training equipment is the new equipment; and a changed training information based on the premise that the training equipment is the equipment partially changed from the existing equipment.

The information about the trainee stored in the server may include work history information of the trainee. The work history information may include an experience information about whether an experience with an existing equipment exists.

The training information may include at least one of: a description of a activation process performed by the training equipment; a description of an equipment structure; a description of a method of operating the equipment; a description of a quality inspection; and information about executing a condition change of the equipment.

The training information may include: information about 3D modeling the training equipment to correspond to actual equipment and implementing motions to correspond to operations of the actual equipment.

The battery cell activation process simulation system includes: a terminal providing the training information to the trainee participating in the training; and an input interface provided at the terminal for inputting information of the trainee participating in the training.

The terminal may include a display that allows the trainee to visually check the training information and an audio device that allows the trainee to audibly check the training information.

The input interface may include a character input interface, a voice input interface, a biometric authentication information input interface, etc. The biometric authentication information may include fingerprint, face, or voice information.

The battery cell assembly activation process simulation system may include a training contents selection logic constructing a training curriculum to be provided to the terminal based on trainee information.

The training contents selection logic may extract a work history of a corresponding trainee corresponding to work history of the trainee and construct a training curriculum based on an extracted work history.

The selection logic may be a software program. The selection logic may be executed in the server or the terminal.

In a partial embodiment, a training curriculum is constructed in the server, and the server may provide training information corresponding to the constructed curriculum to the terminal.

In a partial embodiment, a training curriculum is constructed in the terminal, and the terminal may request training information corresponding to the constructed curriculum from the server, and the server may provide the requested training information to the terminal.

The training contents selection logic may provide the changed training information as the training information about the training equipment partially changed from the existing equipment when it is confirmed that the trainee has experience with the existing equipment based on the experience information of the trainee participating in the training.

The operating method of a simulation system includes: receiving information about a trainee; constructing a training curriculum by selecting training information for training equipment based on the received information about the trainee; and providing constructed training curriculum to a terminal for training of the trainee.

The information of the trainee may be inputted through the input interface of the terminal. The inputted information of the trainee may be transmitted to the server.

The step of constructing a training curriculum may include extracting the work history of the trainee and constructing the training curriculum based on the extracted work history.

The server may extract the work history of the trainee corresponding to the received information.

In a partial embodiment, the server may construct a training curriculum based on the extracted work history. The training curriculum may be constructed by selecting appropriate training information based on the work history of the trainee among the training information for the training equipment stored in the server. The server may provide the training information corresponding to the constructed training curriculum to the terminal.

In a partial embodiment, the server may send the extracted work history of the trainee to the terminal, and the terminal may construct a training curriculum based on the received work history. The training curriculum may be constructed by selecting appropriate training information based on the work history of the trainee among the training information for the training equipment stored in the server. The terminal may request the training information corresponding to the constructed training curriculum from the server. The server may provide the requested training information to the terminal.

In constructing the training curriculum, for the training equipment that is identical to the existing equipment and that the trainee has experience on, the training curriculum may be constructed for providing: information that the training equipment is identical to the existing equipment based on the work history of the trainee; and an option to select whether to complete a training for the training equipment.

In constructing the training curriculum, the training curriculum may be constructed by, for the training equipment that is partially changed from the existing equipment that the trainee has experience on based on the work history of the trainee, selecting the changed training information based on the premise that the training equipment is the equipment partially changed from the existing equipment.

The training curriculum may be constructed by, for the training equipment that is identical to or partially changed from the existing equipment that the trainee does not have experience on based on the work history of the trainee, selecting the new training information based on the premise that the training equipment is the new equipment.

The training curriculum may be constructed by, for the new equipment, selecting the new training information based on the premise that that the equipment may be the new equipment.

The training information may include an explanation about quality inspection to be managed in the training equipment, and a training scenario regarding countermeasures for defective products.

The training information may include training procedures related to 'equipment operation, physical measures, and quality inspections'. The training procedures may include at least one of training for the task of classifying defective battery cells discharged according to the defect type, training for the task of re-introducing battery cells classified as re-work battery cells as a result of exterior inspection into exterior inspection equipment, and training for the task of re-introducing battery cells classified as re-work battery cells as a result of characteristic inspection into activation equipment.

The training information may include training procedures related to 'operation preparation and start-up'. The training procedures may include at least one of training for the operation of removing remaining battery cells and setting up operation for each equipment before operating the EOL process equipment, training for the operation of feeding materials that need to be supplemented into each device of the shipping packaging equipment, training for the operation of completing the current lot during the operation of the EOL process equipment and changing to the next lot, and training for the operation of changing the equipment to automatic operation before operating the EOL process equipment. Preferably, the training procedures may include all of the trainings.

The training information may include a level test for verifying a work proficiency of the trainee, and the training content selection logic may select the training scenario based on the work proficiency of the trainee verified by the level test.

### [ADVANTAGEOUS EFFECTS]

According to the battery cell activation process simulation system and the operating method thereof of the present invention, it is possible to train trainees without affecting the operation of actual equipment.

According to the present invention, it is possible to train trainees in advance before the actual equipment is constructed such that the equipment may be operated smoothly as soon as the construction of the equipment is completed.

According to the present invention, customized training is performed according to the work experience of the trainee such that the training period of the trainee may be shortened and the training efficiency may be increased.

According to the present invention, the product parameter management ability of the trainee may be improved in advance, and problems that may occur according to the training results may be visually provided to the trainee such that the training effect equivalent to that of apprenticeship training may be achieved through virtual training.

In addition to the advantageous effects described above, specific effects of the present invention will be described further while describing specific details of the present invention.

### [BRIEF DESCRIPTION OF DRAWINGS]

FIG. 1 is a perspective view of a cylindrical battery cell which is an example of a battery cell to which an assembly process simulation system of the present invention is applied.
FIG. 2 schematically illustrates activation equipment and exterior inspection equipment of the cylindrical battery cell of FIG. 1.
FIG. 3 schematically illustrates packaging equipment subsequent to the exterior inspection equipment.
FIG. 4 illustrates an embodiment of an assembly process simulation system according to the present invention.
FIG. 5 is a diagram illustrating existing equipment, training equipment, and relationships therebetween.
FIG. 6 illustrates history information about trainees stored in the server.
FIG. 7 illustrates a simulation of 3D modeling for process equipment displayed on a display.
FIG. 8 illustrates a simulated HMI displayed on a display.
FIG. 9 illustrates simulated vision and sensor measurement information according to exterior inspection displayed on a display.
FIG. 10 illustrates a simulated production execution system displayed on a display.
FIG. 11 illustrates an operation panel of an equipment displayed on a display.
FIG. 12 illustrates a hardware buttons of an equipment displayed on a display.
FIG. 13 is a flow chart illustrating an operating method of the simulation system according to the present invention.
FIG. 14 is a flow chart illustrating a specific method for a training curriculum construction of FIG. 13.

[DESCRIPTION OF REFERENCE NUMERALS]
10: cylindrical battery cell
11: first electrode terminal
12: second electrode terminal
20: activation equipment
30: measuring equipment (IR/OCV)
40: characteristic inspection equipment (CST)
41: precision measuring stage
50: exterior inspection equipment
52: re-inspection equipment
54: re-evaluation area
56: grader
70: packaging equipment
71: inner box feeder
72: lower tray feeder
73: upper tray feeder
74: inner packaging desiccant feeder
75: outer box feeder
76: tape attachment device
77: labeling device
78: pallet feeder
79: outer packaging device(lower vinyl feeder, outer packaging desiccant feeder, upper vinyl feeder, upper angle feeder, side surface angle feeder, banding device, wrapping device)
80: server
90: terminal
91: display
92, 93: audio device
95: character input interface
96: voice input interface
97: biometric authentication information input interface

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural. The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

Herein, when a component (e.g., a first component) is referred to as being "connected," "coupled," or "joined" to another component (e.g., a second component) with or without the terms "functionally" or "communicatively," or is referred to as being "coupled" or "connected," it means that the component may be connected to another component directly (e.g., wired or wirelessly), or indirectly (e.g., through a third component).

The method according to various embodiments disclosed herein may be provided in a computer program product. The computer program product may be traded between a seller and a buyer as a commodity. The computer program product may be distributed in the form of a machine-readable storage medium (e.g., a compact disc read only memory, a CD-ROM), or may be distributed online (e.g., downloaded or uploaded) through an application store or directly between two user devices. In the case of online distribution, at least a part of the computer program product may be temporarily stored or temporarily generated in a device-readable storage medium such as a memory of a manufacturer's server, an application store's server, or an intermediary server.

According to the embodiments disclosed herein, each component (e.g., a module or a program) of the described components may include a single or multiple entities, and some of the multiple entities may be separately arranged in other components. According to the embodiments disclosed herein, one or more of the components or operations of the above-described corresponding components may be omitted, or one or more other components or operations may be added. Alternatively or additionally, a plurality of components (e.g., modules or programs) may be integrated into a single component. In such case, the integrated component may perform one or more functions of each of the plurality of components identically or similarly to those performed by the corresponding component of the plurality of components prior to the integration. According to the embodiments disclosed herein, the operations performed by the modules, programs or other components may be executed sequentially, in parallel, repeatedly, or heuristically, or one or more of the operations may be executed in a different order, omitted, or one or more other operations may be added.

Hereinafter, a preferred embodiment of a battery cell activation process simulation system and an operating method thereof according to the present invention will be described in detail with reference to the attached drawings.

The battery cell activation process simulation system is used to train workers who perform battery cell activation processes as their tasks. The activation process may include EOL process.

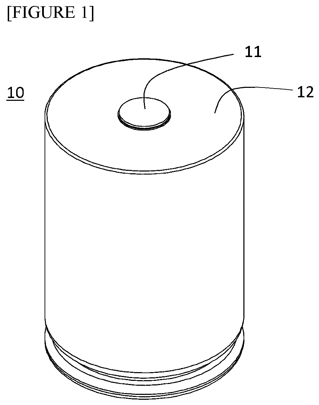

The battery cell that is the target of the activation process exemplified in the embodiment may be the cylindrical battery cell 10 illustrated in FIG. 1. The cylindrical battery cell 10 may have a form factor of, for example, 46800 or 46950.

The battery cell 10 may include a first electrode terminal 11 which is an anode electrode terminal in the form of a rivet at the top, and a second electrode terminal 12 which is electrically insulated from the first electrode terminal 11 and defined by a top surface member of a can surrounding the first electrode terminal 11.

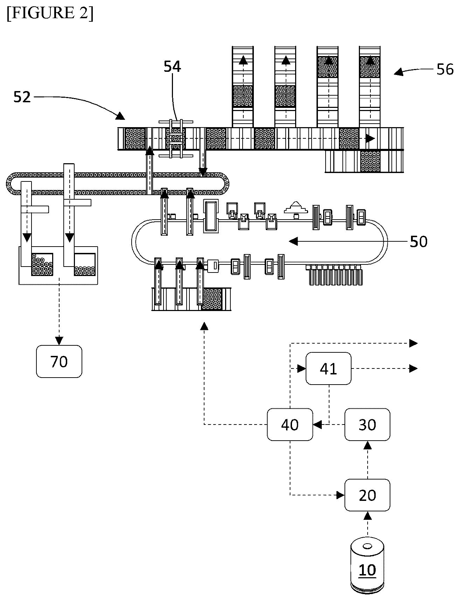

Referring to FIG. 2, the assembled cylindrical battery cell 10 undergoes activation in an activation equipment 20 that performs charge and discharge and aging at least once. For example, the activation equipment 20 may perform LCI (low current inspector), charge and discharge, high-temperature aging, OCV measurement, etc. The battery cell 10 that undergoes activation in the activation equipment 20 is transferred to the internal resistance and open circuit voltage measuring equipment 30 and the internal resistance and open circuit voltage are measured.

The battery cell 10 for which the internal resistance and open circuit voltage are measured is classified into non-defective product, defective product in characteristics, defective product for re-work, and defective product to be discarded according to the activation characteristic grade in the characteristic inspection equipment 40.

The non-defective battery cell is transferred to the exterior inspection equipment 50, which is the subsequent process. Meanwhile, the defective battery cells for re-work are automatically received by the activation equipment 20 and re-work is performed by the designated re-work route. The defective battery cells to be discarded are classified as low voltage defects and charging defects and discarded.

The defective battery cells in characteristics are battery cells having resistance and voltage measured by the measuring equipment 30 are outside the allowable standards, and may be re-selected by performing precision measurements again at the precision measuring stage 41. That is, when the defective battery cells in characteristics are determined to be non-defective products through precision measurements, the defective battery cells in characteristics are transferred to the exterior inspection equipment 50, and when the defective battery cells in characteristics are determined to be defective products for re-work, the defective battery cells in characteristics are received by the activation equipment 20 and re-work is performed by the designated re-work route. The defective battery cells to be discarded are classified as low voltage defects and charging defects and discarded.

A battery cell determined as a non-defective product in IR/OCV is photographed by a vision camera in the exterior inspection equipment 50, and 2D and 3D images are processed to inspect the exterior of the upper and lower portions and side surfaces of the battery cell 10, and the flatness and exterior dimensions are inspected.

A battery cell determined as a non-defective product in the exterior inspection equipment is transferred directly to the packaging equipment 70. Meanwhile, a battery cell 10 determined as defective in the exterior inspection equipment is sent to the re-inspection equipment 52.

In the re-inspection equipment 52, the battery cell 10 is in standby in the re-evaluation area 54, and the re-evaluation of the exterior defect is performed in the area. The re-evaluation may be performed by a worker checking the inspection image acquired in the exterior inspection equipment 50.

The re-inspection equipment 52 is connected to the grader 56.

Defective battery cells that are re-determined as non-defective products as a result of the re-evaluation are sent to the packaging equipment 70. Meanwhile, battery cells that are determined to have exterior defects as a result of the re-evaluation are classified by the defect type in the grader 56 and discharged. For example, the classification includes discard, barcode re-work, foreign matter re-work, etc. Barcode re-work is a task to re-mark a barcode that is unclear, and foreign matter re-work may be a task to remove foreign matter on the surface of the battery cell.

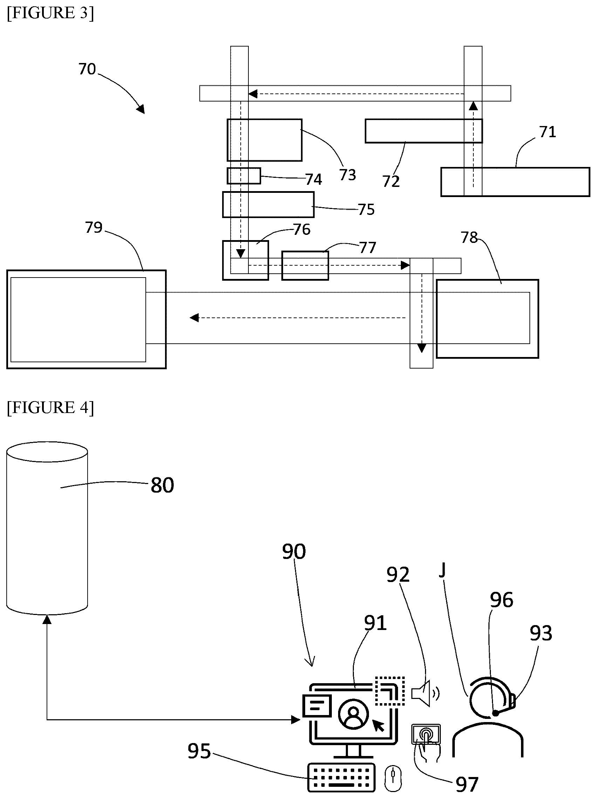

Referring to FIG. 3, battery cells supplied from the exterior inspection equipment 50 are accommodated in the inner box fed from the inner box feeder 71. Here, the battery cells are fed into the inner box with the lower tray supplied from the lower tray feeder 72 placed thereunder. The upper tray supplied from the upper tray feeder 73 covers the upper portion of the battery cell of the inner box. In addition, the inner packaging desiccant feeder 74 supplies the desiccant to the inner box.

The inner box is accommodated in the outer box supplied from the outer box feeder 75. Thereafter, the tape that closes the outer box is attached in the tape attachment device 76, and the outer box is labeled in the labeling device 77. The outer box is loaded on the pallet supplied from the pallet feeder 78.

In addition, in the outer packaging device 79, the pallet is placed on the lower vinyl supplied from the lower vinyl feeder, and the pallet is covered with the upper vinyl supplied from the upper vinyl feeder while the desiccant supplied from the outer packaging desiccant feeder is supplied. Thereafter, the upper angle and side surface angle supplied from the upper angle feeder and the side surface angle feeder are banded with a banding device to surround the pallet, and the wrapping device wraps the same to complete the packaging.

The packaging equipment 70 sequentially read the ID of the battery cell, the ID of the inner box into which the battery cell is inserted, the ID of the outer box into which the inner box is inserted, and the ID of the pallet on which the outer box is loaded at an appropriate time during the packaging process to collect tracking information.

Among the activation process equipment of the cylindrical battery cell 10, the training equipment that is the target of training includes at least one of internal resistance and open circuit voltage measuring equipment 30, characteristic inspection equipment 40, exterior inspection equipment 50, re-inspection equipment 52, grader 56, and packaging equipment 70. Preferably, the training equipment includes all of the above.

The training equipment includes at least one of the inner box feeder 71, the lower tray feeder 72, the upper tray feeder 73, the inner packaging desiccant feeder 74, the outer box feeder 75, the tape attachment device 76, the labeling device 77, the pallet feeder 78, and the outer packaging device 79 of the packaging equipment 70. Preferably, the training equipment includes all of the above.

The training equipment includes at least one of the lower vinyl feeder, the outer packaging desiccant feeder, the upper vinyl feeder, the upper angle feeder, the side surface angle feeder, the banding device, and the wrapping device of the outer packaging device 79. Preferably, the training equipment includes all of the above.

That is, training equipment constructed for process equipment that is the target of training among the activation process equipments may include all of the equipments or may selectively include equipment that requires training.

Referring to FIG. 4, the battery cell activation process simulation system includes a server 80 where information about the training equipment is stored.

The server 80 may further store existing equipment information about existing battery cell activation process equipment. The existing battery cell may be a cylindrical battery cell having a form factor of 21700. In addition, the existing equipment corresponding thereto may include at least one of internal resistance and open circuit voltage measuring equipment, exterior inspection equipment, and packaging equipment, and preferably may include all of the above. In addition, the packaging equipment of the existing equipment may include at least one of an inner box feeder, a tray supply device, a desiccant feeder, an outer box feeder, a tape attachment device, and a labeling device, and preferably may include all of the above.

In addition, the existing battery cell assembly process equipment may further include activation process equipment for a cylindrical battery cell having a form factor of 18650.

Information about the training equipment includes basic information and training information.

The basic information includes whether training equipment is: an equipment identical to the existing equipment; an equipment partially changed from the existing equipment; and new equipment.

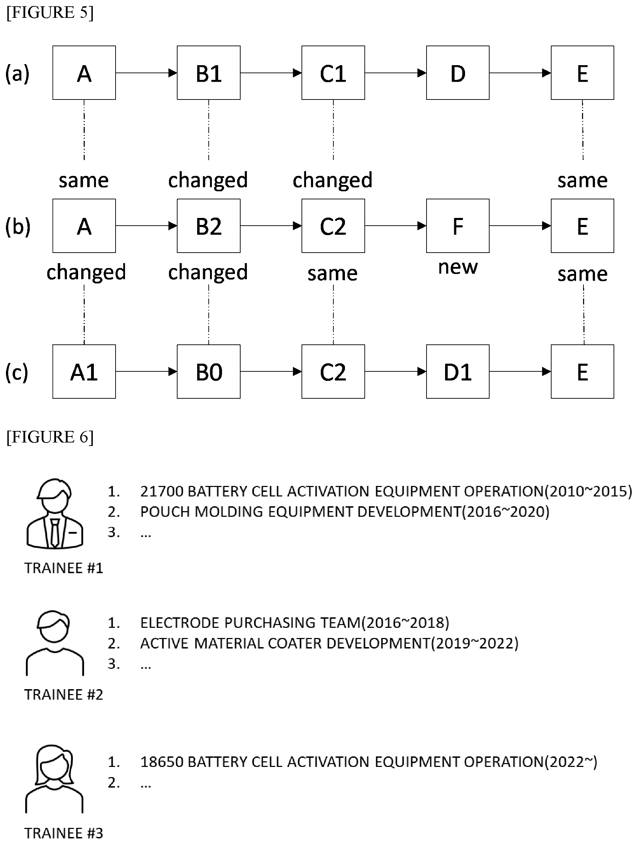

For example, referring to FIG. 5, the training equipment (b) may include five equipments, for example, A, B2, C2, F and E, the existing equipment (a) related to the 21700 battery cell may include five equipments, for example, A, B1, C1, D and E, and the existing equipment (c) related to the 18650 battery cell may include five equipments, for example, A1, B0, C2, D1 and E. In such case, the basic information about the training equipment (b) may represent that the A equipment is identical to the existing equipment (a) and is partially changed from the existing equipment (c), the B2 equipment is partially changed from the existing equipment (a) and the existing equipment (c), the C2 equipment is partially changed from the existing equipment (a) and is identical to the existing equipment (c), F equipment is a new equipment that is not present before, and the E equipment is identical to the existing equipment (a) and the existing equipment (c).

Here, the term "identical" does not mean strictly identical, but may be understood as meaning that the content to be learned when training for the relevant equipment is substantially the same as the content to be learned when training for the existing equipment. In addition, the term "partially changed" may be understood as meaning that some of the content to be learned when training for the relevant equipment overlaps with the content to be learned for existing equipment, and some is new content that is not in the content to be learned for existing equipment or content that may be explained by comparing the same with the content to be learned for existing equipment.

Training information for the identical training equipment may include different versions of training information. For example, the different versions of training information may include a new version of training information based on the premise that the training equipment is new equipment and an updated version of training information based on the premise that the equipment is partially changed from the existing equipment.

For example, referring to FIG. 5, the training information version for B2 equipment among training equipment (b) may include a new version of training information based on the premise that B2 equipment is new equipment, an updated version of training information that focuses on the differences between B2 equipment and B1 equipment of existing equipment (a), and a updated version of training information that focuses on the differences between B2 equipment and B0 equipment of existing equipment (c). The training information version for F equipment among training equipment (b) may include a new version of training information based on the premise that F equipment is new equipment. The training information version for E equipment among training equipment (b) may include a new version of training information based on the premise that E equipment is new equipment.

In the server 80, information about the trainees participating in the training is stored. The information may be continuously updated. The trainee information includes the trainee's work history information. The trainee's work history stored in the server includes information about whether or not the trainee has experience with the existing equipment.

For example, referring to FIG. 6, the work history information of trainee #1 includes information that the trainee #1 has experience with 21700 battery cell activation process equipment, the work history information of trainee #2 includes information that trainee #2 does not have experience with the existing equipment, and the work history information of trainee #3 includes information that the trainee #3 has experience with 18650 battery cell activation process equipment.

Referring to FIG. 4, the battery cell activation process simulation system according to the embodiment includes a terminal 90 providing training information to a trainee J participating in the training. The trainee J may virtually experience and learn the activation process of the battery cell through interaction with the terminal 90.

The server 80 may manage the training information provided to the trainee J by the terminal 90. The server 80 may store the training information performed by the trainee J through the terminal 90, calculate statistical data based on the training information, add or change the training information based on the statistical data, and transmit the training information to the terminal 90. The server 80 may install or update the training information management software on the terminal 90.

The terminal 90 is connected to the server 80 to transmit and receive information through a known communication protocol. The terminal may include a display 91 through which the trainee J may visually check the training information and audio devices 92 and 93 through which the trainee may audibly check the training information.

The terminal 90 includes an input interface through which the trainee participating in the training may input information. The input interface may include a character input interface 35 including a keyboard, a mouse, a touch panel, etc., a voice input interface 36 including a microphone, a biometric authentication information input interface 37 including a camera and a fingerprint recognition device, etc. The biometric authentication information may include fingerprint, face, or voice information.

The trainee J may input information about himself/herself through the input interface. In addition, the trainee may interact with the terminal 90 through the input interface. The trainee J generates operation inputs in the form of touch input, button input, mouse input, voice input, etc., and the input interface may receive the operation inputs of the trainee J. The received operation inputs may be used for operating the terminal 90, selecting items, adjusting process conditions, etc.

The terminal 90 may include a processor and memory for executing simulation software.

The processor may have a structure for executing commands that embody operations of the terminal 90. The processor may be implemented as an array of a plurality of logic gates or a general-purpose microprocessor for processing various operations, and may be constituted by a single processor or multiple processors. For example, the processor may be implemented in the form of at least one of a microprocessor, a CPU, a GPU and an AP.

The memory or storage may be configured to temporarily store data or commands, and may be configured to be separate from or integrated with the processor. The processor may process various operations by executing commands stored in the memory and/or storage. The memory and/or storage may store various data, commands, mobile applications, computer programs, etc. For example, the memory and/or storage may be implemented as a nonvolatile device such as ROM, PROM, EPROM, EEPROM, flash memory, PRAM, MRAM, RRAM, FRAM, etc., or a volatile device such as DRAM, SRAM, SDRAM, PRAM, etc., and may be implemented in the form of HDD, SSD, SD, Micro-SD, etc., or a combination thereof.

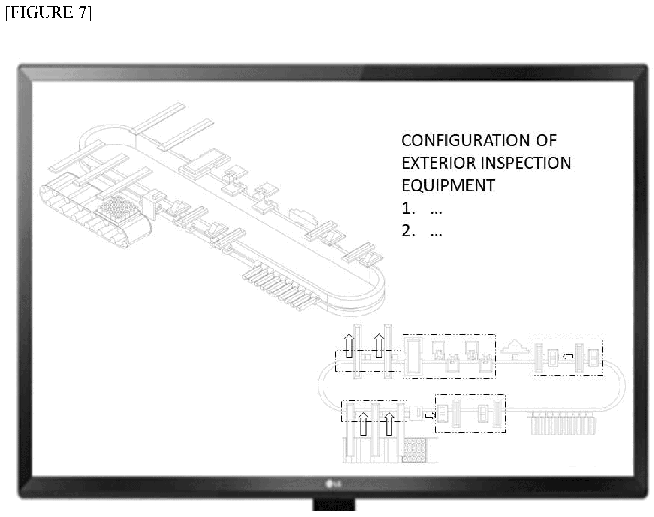

The display 91 may provide various visual information to the trainee J. The display 91 may display a simulation image of the training equipment running on the terminal 90 as shown in FIGS. 7 to 10.

For example, when the assembly process of a cylindrical battery cell is virtually simulated in the terminal 90, the display 91 may display images of the exterior and operation of the corresponding process equipment that may be recognized with the naked eye by simulating the actual equipment as shown in FIG. 7. In addition, the display 91 may also display images of the non-visible areas of the corresponding process that cannot be recognized with the naked eye.

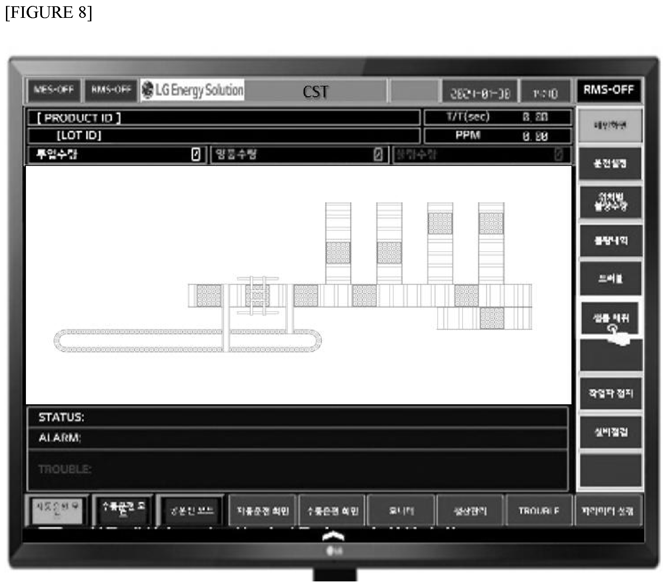

In addition, the display 91 may output images simulating the equipment operation panel used in the actual activation line as shown in FIG. 8, and the operating method may also be embodied in the same manner as the operating method of the actual equipment operation panel through the input interface.

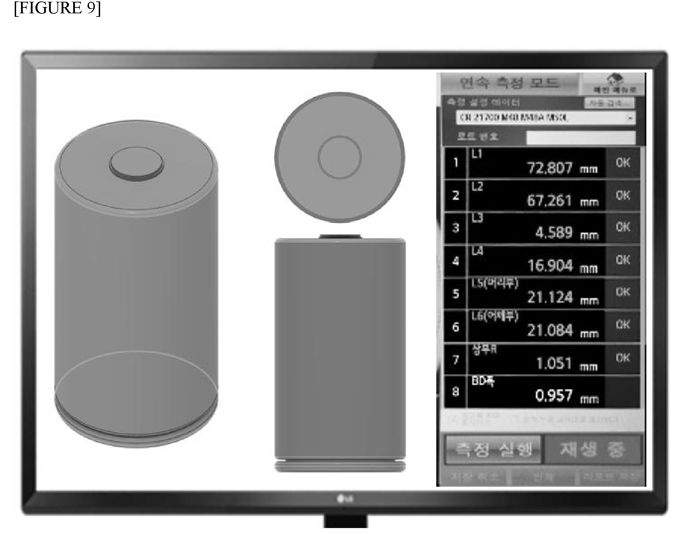

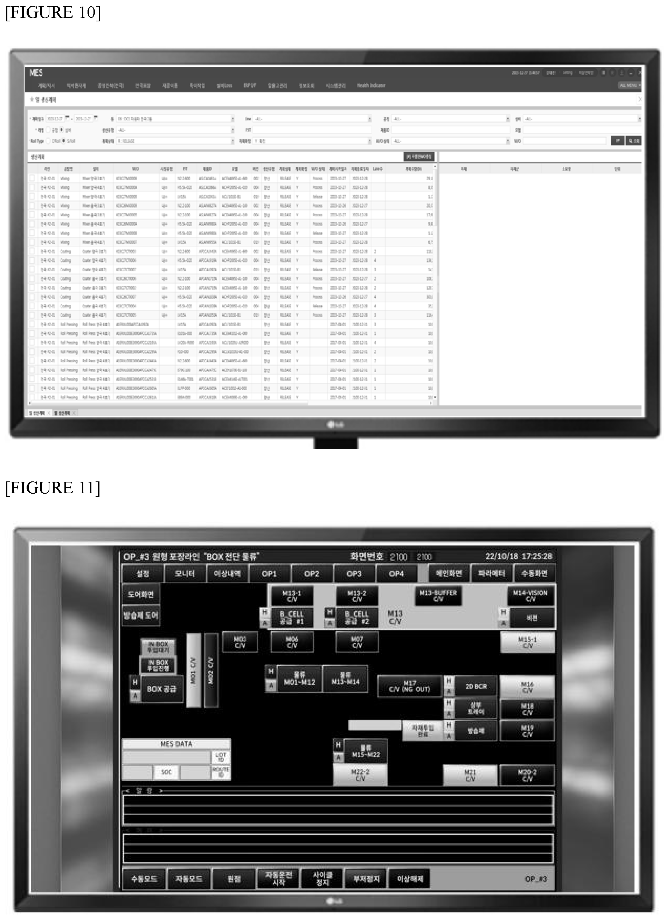

In addition, the display 91 displays images simulating the vision and sensor measurement screen, the dimension measurement screen, etc. as shown in FIG. 9, and displays images simulating the production execution system as shown in FIG. 10.

Terminal 90 provides training information to trainee J that reproduces the assembly process of the battery cell based on the operation input of the trainee J through the input interface. For example, a training simulation that reconstructs the actual activation process of the cylindrical battery cell identically through the operation input is executed.

Terminal 90 may interact with trainee J to provide training information to trainee J. For example, for the battery cell exterior inspection process, the trainee J may experience training information about how the exterior inspection of the battery cell 10 is performed in the exterior inspection equipment 50 as a virtual reality implemented as a 3D image as shown in FIG. 7. Here, the trainee J may virtually experience the operation of the exterior inspection equipment 50 by manipulating the input interface. Referring to FIG. 8, the display and the input interface may simulate the operation panel of an actual grader 56, and the input method and the manipulating input may also be implemented to correspond to the actual equipment.

The display 91 of the terminal 90 is configured to display a detailed image based on the characteristics of the training information. For example, in the exterior inspection training information performed in the re-evaluation area 54 of the re-inspection equipment 52, detailed images of the exterior, dimensions, flatness, cylindricality, etc. of the measurement target may be displayed on the display 91 as shown in FIG. 9, and for example, in the training information on the condition change execution of the equipment, an image of the production execution system (MES) may be displayed on the display 91 as shown in FIG. 10.

Referring to FIG. 7, the training information includes information that 3D models the training equipment to correspond to the actual equipment and implements motion to correspond to the operation of the actual equipment. The training information may be configured as a camera view corresponding to the movement line and line of sight of the trainee for equipment operation and inspection. Such training information may include information about 7 activation process main equipments and information about 15 sub-units of the packaging equipment.

The training information about the training equipment includes a description of the activation process and shipment packaging process performed by the training equipment, a description of the equipment structure, a description of the method of operating the equipment, a description of quality inspection, and information about executing condition changes of the equipment. In addition, the training information includes process and equipment guide information including a description for operating the equipment, and a virtual scenario for training to operate or inspect the quality of the equipment.

The training information includes a level test procedure for improving the trainee's work proficiency. The training information may include a virtual scenario for training to adjust the conditions of the process, a virtual scenario for training to determine a defect in the process, a virtual scenario for training to deal with a defect in the process, etc.

The training information includes at least one of the guide information for the activation process of the cylindrical battery cell, equipment operation information, and operation confirmation information. The process guide information describes the assembly processes of the cylindrical battery cell. The trainee may be virtually trained in individual activation processes and activation procedures through 3D simulation and motion. The equipment operation information includes information about the operation, maintenance and management of process equipments required to perform the assembly processes. The operation confirmation information may include information for virtually experiencing the process of inspecting each packaging process.

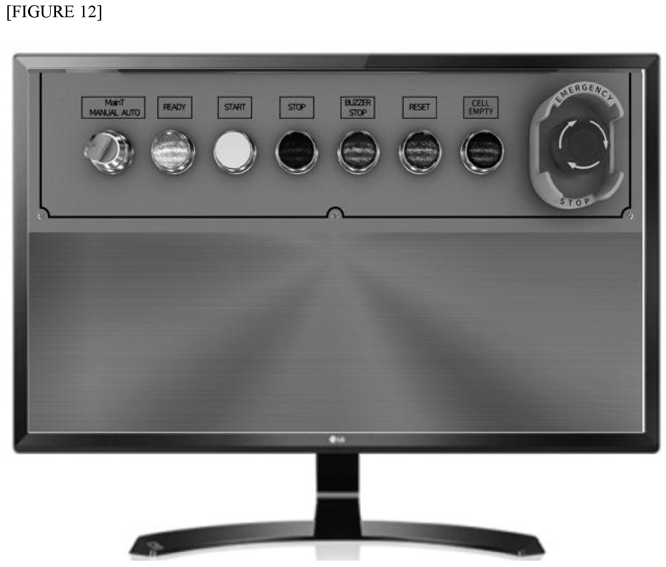

The training information may include training procedures related to 'operation preparation and start-up'. The training procedure is performed by displaying the operation panel of each equipment and the hardware button of each equipment as shown in FIG. 11 and FIG. 12, respectively, on the display 91.

The first training procedures may include at least one of training for the operation of removing remaining battery cells and setting up operation for each equipment before operating the EOL process equipments 30, 40, 40 and 50, training for the operation of feeding materials that need to be supplemented into each device of the shipping packaging equipment 70, training for the operation of completing the current lot during the operation of the EOL process equipment and changing to the next lot, and training for the operation of changing the equipment to automatic operation before operating the EOL process equipment. Preferably, the training procedures may include all of the trainings.

The training information may include a second training procedures related to 'equipment operation, physical measures, and quality inspections'.

The second training procedures may include at least one of training for the task of classifying defective battery cells discharged from characteristic inspection equipment 40 according to the defect type, training for the task of re-introducing battery cells classified as re-work battery cells as a result of exterior inspection into exterior inspection equipment 50, and training for the task of re-introducing battery cells classified as re-work battery cells in the characteristic inspection equipment 40 into activation equipment 20.

The training information may include a level test for verifying a work proficiency of the trainee, and the training content selection logic may select the training scenario based on the work proficiency of the trainee verified by the level test.

The server 80 accumulatively stores and manages training information performed by trainee J and the result information thereof. Whenever trainee J performs training on the terminal 90, the server 80 may receive training content and the result thereof from the terminal 90 and store the same in a database. Based on this, the server 80 may update the type, content and training scenario of training information and provide the same to the terminal 90.

The simulation system according to the embodiment reflects different task histories for each trainee J and plans and provides a training curriculum that allows each trainee J to quickly and efficiently receive training. In order to achieve this, the battery cell activation process simulation system according to the embodiment includes training contents selection logic that extracts work history of a trainee corresponding to information of the trainee inputted through an input interface from a server 80 and constructs a training curriculum to be provided to the terminal based on the extracted work history.

The selection logic may be a software program. The selection logic may be executed on the server 80 or on the terminal 90. The selection logic may be implemented in the form of a computer program stored on a computer-readable storage medium. That is, the computer program may include instructions for implementing the selection logic, and the instructions of the program may be stored on a computer-readable storage medium. The computer program may include a mobile application.

According to the embodiment, the computer-readable storage medium may include magnetic media such as a hard disk, a floppy disk and a magnetic tape, optical media such as a CD-ROM, a DVD, magneto-optical media such as a floptical disk, and hardware devices specifically configured to store and execute computer program instructions such as a ROM, a RAM, a flash memory, etc. The computer program instructions may include machine language codes generated by a compiler and high-level language codes that may be executed by a computer using an interpreter, etc.

The training contents selection logic provides changed training information as training information for training equipment that has been partially changed from the existing equipment when it is confirmed that the trainee has experience with the existing equipment based on the experience information of the trainee participating in the training.

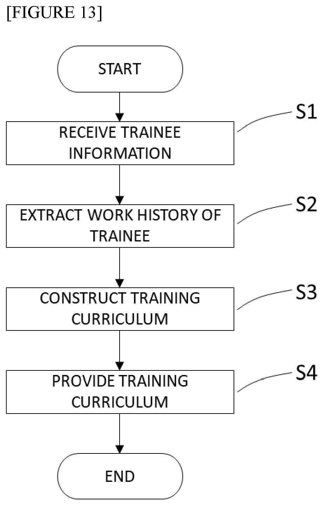

Referring to FIG. 13, the method of operating the simulation system includes: a step S1 of receiving information about a trainee J; a step S2 of extracting work history of the trainee J corresponding to the received information; a step S3 of constructing a training curriculum by selecting training information for the training equipment based on the extracted work history; and a step S4 of providing the constructed training curriculum to the terminal 90 for training of the trainee.

The information of the trainee may be inputted through the input interface of the terminal 90. The inputted information of the trainee is transmitted to the server 80. The server 80 extracts the work history of the trainee corresponding to the received information. Referring to FIG. 6, the work history includes the experience of the trainee J regarding the equipment.

According to the first embodiment, the task of constructing a training curriculum based on the extracted work history may be performed in the server 80. That is, the training contents selection logic may be executed in the server 80. The training curriculum may be constructed by selecting appropriate training information based on the trainee's work history among the training information about the training equipment stored in the server 80. The server may provide the terminal with training information corresponding to the constructed training curriculum.

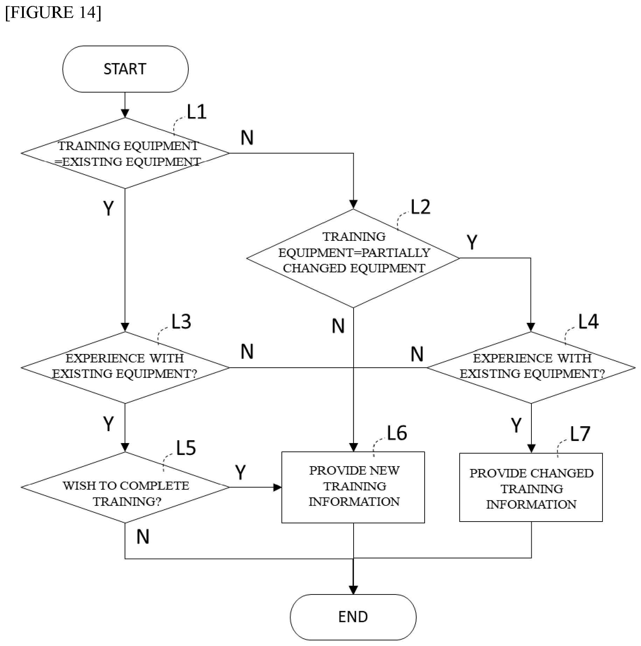

According to the second embodiment, the server 80 transmits the extracted work history of the trainee to the terminal 90, and the terminal 90 may construct a training curriculum based on the received work history. That is, the training contents selection logic may be executed in the terminal 90. Referring to FIG. 14, the training curriculum may be constructed by selecting appropriate training information based on the work history of the trainee among the training information for the training equipment stored in the server. The terminal 90 may request the training information corresponding to the constructed training curriculum from the server 80. Thereafter, the server 80 may provide the requested training information to the terminal 90.

The training contents selection logic may construct a curriculum that provides the trainee with information that the training equipment is identical to the existing equipment and the trainee has experience with the existing equipment based on the work history of the trainee J, and provides the trainee with an opportunity to choose whether to complete the training for the training equipment. This is referred to as first logics L1, L3 and L5 for convenience of description.

The training contents selection logic may construct the training curriculum by selecting changed training information based on the work history of the trainee J, for the training equipment that is partially changed from the existing equipment and for which the trainee has experience with the existing equipment, based on the premise that the equipment is partially changed from the existing equipment. This is referred to as second logics L2, L4 and L7 for convenience of description.

The training contents selection logic may construct the training curriculum by selecting new training information based on the work history of the trainee J, for the training equipment that is identical to the existing equipment or partially changed from the existing equipment that the trainee does not have experience with based on the premise that the equipment is new. This is referred to as third logics L2, L4 and L6 for convenience of description.

The training contents selection logic may construct the training curriculum by selecting new training information based on the premise that the equipment is new for the new training equipment among the training equipments. For convenience of description, this is referred to as fourth logics L1, L2 and L6.

For example, referring to FIGS. 5 and 6, in the case of trainee #1, the training contents selection logic constructs a training curriculum according to the first logic for A equipment, according to the second logic for B2 equipment, according to the second logic for C2 equipment, according to the fourth logic for F equipment, and according to the first logic for E equipment.

In the case of trainee #2, the training curriculum is constructed according to the third logic for A equipment, according to the third logic for B2 equipment, according to the third logic for C2 equipment, according to the fourth logic for F equipment, and according to the third logic for E equipment.

In the case of trainee #3, the training curriculum is constructed according to the second logic for A equipment, according to the second logic for B2 equipment, according to the first logic for C2 equipment, according to the fourth logic for F equipment, and according to the first logic for E equipment.

According to the present invention, the curriculum may be optimally constructed according to the experience status of the trainee J, thereby obtaining the most efficient training effect.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery cell activation process simulation system, comprising: a server storing existing equipment information about an existing battery cell activation equipment, basic information and training information about a training equipment as a training target battery cell activation equipment, and information of a trainee participating in the training ; a terminal providing the training information to the trainee participating in the training; an input interface provided at the terminal for inputting information of the trainee participating in the training; and a training contents selection logic constructing a training curriculum to be provided to the terminal based on an inputted information of the trainee,
wherein the basic information of the training equipment comprises whether a corresponding training equipment is: an equipment identical to the existing equipment; an equipment partially changed from the existing equipment; and new equipment,
the training information of the training equipment comprises: a new training information based on a premise that the corresponding training equipment is the new equipment; and a changed training information based on a premise that the corresponding training equipment is the equipment partially changed from the existing equipment, and
the training contents selection logic provides different training information based on information of the trainee participating in the training.

2. The battery cell activation process simulation system of claim 1, wherein the information of the trainee stored in the server comprises work history of the trainee, and
the training contents selection logic constructs the training curriculum based on the work history of the trainee.

3. The battery cell activation process simulation system of claim 2, wherein the work history of the trainee stored in the server comprises an experience information about whether an experience with an existing equipment exists, and
the training contents selection logic provides the changed training information as the training information about the training equipment partially changed from the corresponding existing equipment when it is confirmed that the corresponding trainee has experience with the existing equipment based on the experience information of the trainee participating in the training.

4. The battery cell activation process simulation system of claim 1, wherein the training equipment comprises a characteristic inspection equipment measuring internal resistance IR and open circuit voltage OCV of a battery cell after an activation process of the battery cell and classifying the battery cell into a non-defective product, a defective product for re-work, a defective product in characteristics, and a defective product to be discarded according to an activation characteristic grade.

5. The battery cell activation process simulation system of claim 4, wherein the training equipment comprises a loading equipment loading battery cells classified as defective by the inspection equipment onto a tray according to the defect type.

6. The battery cell activation process simulation system of claim 1, wherein the training equipment comprises: an exterior inspection equipment determining whether the battery cell is defective by inspecting an exterior of a battery cell determined as a non-defective product by an inspection equipment; and a re-inspection equipment feeding the battery cell determined as defective by the exterior inspection equipment back into the exterior inspection equipment.

7. The battery cell activation process simulation system of claim 1, wherein the training information comprises at least any one of a description of an activation process and shipping packaging process performed by the training equipment, a description of an equipment structure, a description of an equipment operation method, a description of quality inspection, and information on an execution of condition changes of an equipment.

8. The battery cell activation process simulation system of claim 1, wherein the training information comprises: information about 3D modeling the training equipment to correspond to actual equipment and implementing motions to correspond to operations of the actual equipment.

9. The battery cell assembly activation process simulation system of claim 1, wherein the training information comprises: a description of quality inspections to be managed in the training equipment, and a training scenario about a method of dealing with defective products.

10. The battery cell activation process simulation system of claim 9, wherein the training information comprises a level test for verifying a work proficiency of the trainee, and the training content selection logic selects the training scenario based on the work proficiency of the trainee verified by the level test.
